# FASCICULE DE BREVET EUROPEEN

(11) **EP 2 553 286 B1**
(45) Date de publication et mention de la délivrance du brevet: **30.11.2016**
(21) Numéro de dépôt: 11714067.3
(22) Date de dépôt: 16.03.2011
(51) Int. Cl.: F16C 33/20, F16C 33/74

(54) **BAGUE AUTOLUBRIFIANTE D'ARTICULATION DESTINEE A ETRE MONTEE SUR UN AXE**
SELBSTSCHMIERENDE BUCHSE FÜR EIN GELENK ZUR MONTAGE AUF EINEM SCHAFT
SELF-LUBRICATING BUSHING FOR A JOINT, WHICH IS INTENDED TO BE MOUNTED ON A SHAFT

(30) Priorité: 29.03.2010 FR 1052296
(43) Date de publication de la demande: 06.02.2013
(73) Titulaire: H.E.F., 42160 Andrezieux-Boutheon (FR)
(72) Inventeur: MASSE, Emmanuel, F- 42110 Feurs (FR); VILLEMAGNE, Patrick, F-42100 Saint-etienne (FR); CHADUIRON, Eric, F-42140 Viricelles (FR)
(74) Mandataire: Cabinet Laurent & Charras
(86) Numéro de dépôt international: PCT/FR2011/050530
(87) Numéro de publication internationale: WO 2011/121205

(56) Documents cités:
- EP-A1- 0 050 949
- -A- XP009 189 601
- DE-A1- 4 310 348
- JP-A- 2009 257 366
- US-A- 3 527 507
- US-B1- 6 524 979

## Description

L'invention se rattache au secteur technique des articulations autolubrifiantes, notamment pour le montage d'un axe dans une bague ou palier, permettant un guidage en translation et/ou en rotation.

L'invention trouve une application avantageuse dans le cas d'articulations travaillant en milieu abrasif.

Dans un milieu abrasif, le phénomène d'usure peut parfois être très important. Cette usure peut apparaître au niveau de l'axe et/ou de la bague et résulte des agressions extérieures généralement au niveau du contact du diamètre extérieur de l'arbre avec le diamètre intérieur de la bague ou palier.

Pour tenter de résoudre ce problème, on a proposé d'équiper l'alésage de la bague ou du palier considéré, d'au moins un joint d'étanchéité et de protection, afin de tenter de préserver un bon fonctionnement de l'articulation en milieu abrasif. Le plus souvent, le corps de la bague est en métal, tandis que le joint rapporté peut être en PU, PA, NBR, ... Par exemple, le joint peut être monté dans un lamage formé coaxialement à l'alésage de la bague.

Toujours en ayant pour objectif de créer une barrière d'étanchéité et de protection vis-à-vis des agressions extérieures, une solution bague ressort de l'enseignement du document WO 2005/072387 qui concerne une bague équipée d'un joint rapporté logé dans un lamage formé à chacune des extrémités de l'alésage de la bague. Chaque joint est conformé pour créer une barrière d'étanchéité.

Or, il est apparu que le fait de rapporter un joint par rapport à la bague, d'une part, et le fait que le joint est dans un matériau différent de celui de la bague, d'autre part, présentent certains inconvénients. Par exemple, il peut y avoir des risques de déchaussement du joint. Le fait que l'articulation soit constituée de pièces hétérogènes en termes de matériaux, peut engendrer des variations dimensionnelles, suite notamment à des phénomènes de dilatation en termes des différentiels entre les composants, d'absorption d'humidité, de reprise de serrage, ...

On observe également que, selon l'état de la technique, plusieurs matériaux sont en contact avec l'axe ou les pièces antagonistes, à savoir le métal pour la bague et la matière du joint. Il en résulte que l'usure n'est pas uniforme.

Enfin, ces joints rapportés génèrent un coût non négligeable en considérant le nombre de pièces nécessaire avec parfois des difficultés de montage.

L'invention s'est fixée pour but de remédier à ces inconvénients d'une manière simple, sûre, efficace et rationnelle.

Le problème que se propose de résoudre l'invention est d'assurer une protection anti-abrasion dans le cas d'une articulation eu égard à tout type d'agression extérieure, sans être obligé de rajouter un joint additionnel, comme il ressort de l'analyse de l'état antérieur de la technique.

Pour résoudre un tel problème, il a été conçu et mis au point une bague d'articulation destinée être montée sur un axe selon les caractéristiques de la revendication 1.

Une bague selon le préambule de la revendication 1 est connue du document EP 0 050 949 A1.

L'invention trouve une application particulièrement avantageuse pour tout type d'articulation, notamment du type pivot travaillant dans un milieu abrasif.

Ces caractéristiques permettent d'obtenir un ensemble homogène étant donné que la lèvre est taillée dans la masse de la bague.

Le serrage entre le diamètre intérieur de la lèvre et le diamètre extérieur de l'axe est compris entre 0,05 et 4 mm, et de préférence 0,2 et 2 mm.

Dans une forme de réalisation préférée, Le matériau composite est une résine époxy ou vinyl ester ou poly ester. La résine époxy ou vinyl ester ou poly ester incorpore des renforts sous forme de fibres thermoplastiques d'épaisseur comprise entre 0,05 et 0,5 mm et intégrant des charges lubrifiantes entre 5 et 50 % du volume.

A partir des caractéristiques à la base de l'invention, différentes formes de réalisation peuvent être envisagées, notamment au niveau de la ou des lèvres.

Ainsi :
- Soit, la lèvre est formée à au moins l'une des extrémités de l'alésage de la bague.
- Soit, la lèvre est formée à partir d'une gorge interne que présente l'alésage de la bague.
- Soit, la lèvre est formée directement à partir de l'alésage de la bague.
- Soit, la lèvre délimite avec la périphérie du corps de la bague, un évidement circulaire.
- Soit, la lèvre délimite avec la périphérie du corps de la bague, un épaulement.

L'invention est exposée ci-après plus en détail à l'aide des figures des dessins annexés dans lesquels :
- les figures 1, 2, 3 et 4 sont des vues en coupe longitudinale montrant plusieurs exemples de réalisation d'une bague d'articulation selon les caractéristiques de l'invention ;
- la figure 5 est une vue en coupe à caractère schématique d'une articulation équipée d'une bague autolubrifiante selon l'invention.

Selon l'invention, la bague ou palier désigné dans son ensemble par (1), est réalisé dans un matériau composite et présente au moins une lèvre (1a) formée directement lors de sa fabrication. Le matériau composite, constituant le corps de la bague, présente un module d'élasticité compris entre 500 et 6000 N/mm2. Ce matériau composite est une résine époxy ou vynil ester ou poly ester renforcée par des fibres thermoplastiques d'épaisseur comprise entre 0,05 mm et 0,5 mm, et intégrant des charges lubrifiantes entre 5 et 50 % du volume.

La bague peut être réalisée par moulage et/ou usinage.

La ou les lèvre(s) (1a) déborde(nt) dans l'alésage (1b) de la bague pour faire office de barrière d'étanchéité et/ou de protection après montage, sur un axe (2) ou autre, en créant un effet de serrage entre le diamètre intérieur (D1) de la bague et le diamètre extérieur (D2) de l'axe (2).

Le serrage entre le diamètre (D1) et le diamètre (D2) est compris entre 0,05 et 4 mm environ et, avantageusement, entre 0,2 et 2 mm.

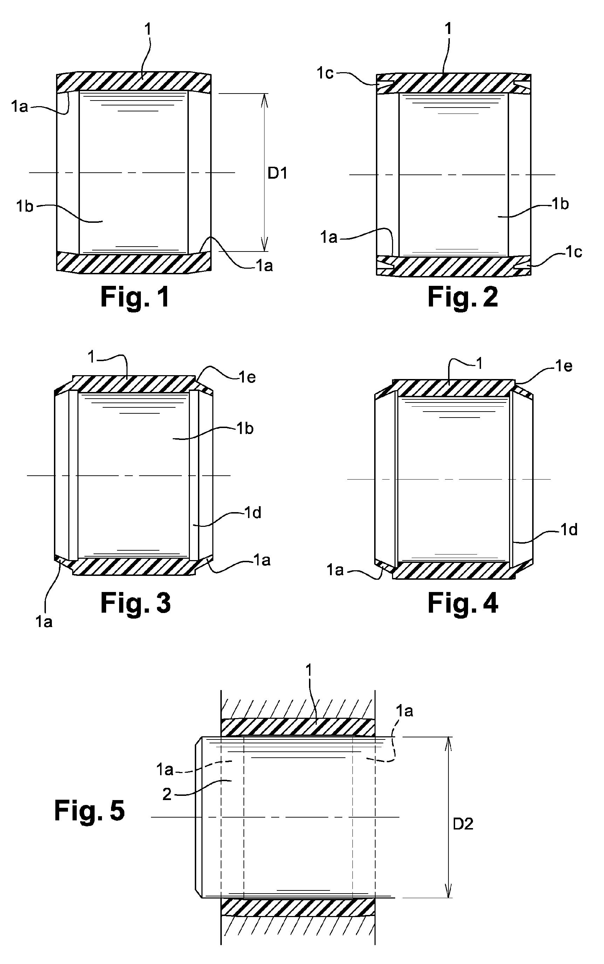

Comme le montrent notamment les figures 1 à 4, une lèvre (1a) est formée à chacune des extrémités de la bague (1). Bien évidemment, sans pour cela sortir du cadre de l'invention, le nombre et la disposition des lèvres ne doivent pas être considérés comme limitatifs.

A la figure 1, chacune des lèvres (1a) est formée directement à partir de l'alésage (1b).

Il en est de même en ce qui concerne la figure 2, sauf que chacune des lèvres (1a) délimite avec la périphérie du corps de la bague (1), un évidement circulaire (1c), afin de favoriser l'élasticité de la lèvre considérée.

Aux figures 3 et 4, chacune des lèvres est formée à partir d'une gorge interne (1d) que présente l'alésage (1b). La largeur de cette gorge peut être variable. Toujours aux figures 3 et 4, chaque lèvre (1a) délimite avec la périphérie du corps de la bague (1), un épaulement (1e).

Des essais d'usure sur des bagues en matériau composite, selon les caractéristiques de l'invention, ont été réalisés en comparaison notamment avec des bagues équipées de joints rapportés, et en référence par rapport à une bague ne présentant pas de joint. Ces tests ont été réalisés sur un simulateur de frottement en mouvement oscillant pendant une durée maximum de 1 mois.

Les conditions des tests ont été les suivantes :
- Pression : 40 MPa.
- Vitesse : 15 m/s.
- PV : 0,6 MPa.m/s.
- Oscillation : +/- 100°.
- Durée maximum des tests : 1 mois.
- Usure maximale admise : 0,5 mm.
- Tests réalisés avec du sable de 50µm en contact avec la liaison arbre / palier.
- Diamètre initial de l'arbre en 16NC6 cémenté trempé : 30 mm.
- Jeu initial : 2 mm.

Avec la bague de référence, c'est-à-dire sans joint d'étanchéité, au bout de 300.000 cycles environ, l'usure maximale admise (0,5 mm) est atteinte.

Avec une bague en métal équipée à l'avant d'un joint CSWM30 en PA, avec une lèvre de diamètre à 29,41 mm, au bout de 300.000 cycles, l'usure maximale admise (0,5 mm) est atteinte.

Avec une bague en matériau composite selon les caractéristiques de l'invention, c'est-à-dire avec lèvre intégrée, d'un diamètre de 29,2 mm et un serrage de 0,78 mm, au bout de 700.000 cycles, l'usure relevée est de 0,2 mm.

Pour chacune des bagues testées, l'usure est déduite d'un relevé quotidien sur des comparateurs placés sur chaque banc de simulation.

Les avantages ressortent bien de la description, en particulier on souligne et on rappelle :
- la nature du matériau composite de la bague lui conférant une fonction autolubrifiante, en combinaison avec la ou les lèvres pour créer une protection efficace eu égard à tous types d'agressions extérieures ;
- la réalisation de la bague intégrant une ou des lèvres permet un gain de coût au montage et en maintenance ;
- l'homogénéité du matériau ;
- l'élasticité du matériau permet une déformation sur la charge, puis un retour à l'état initial sans la charge ;
- l'amélioration de la durée de vie ;
- l'absence de pièce métallique rend la bague compatible avec certains milieux (liquide, gazeux) ou avec des environnements magnétiques comme, par exemple, ceux rencontrés dans le domaine de l'instrumentation médicale ;
- pas de dilatation relative, étant donné que la déformation due à la chaleur est la même en tout point de la bague ;
- la limitation des nuisances sonores ;
- la possibilité de réaliser une ou des gorges facilitant et améliorant l'élasticité de la ou des lèvres.

## Revendications

1. Bague autolubrifiante d'articulation (1) destinée être montée sur un axe (2) et permettant un guidage en translation et/ou en rotation, ladite bague présente, au moins une lèvre (1a) formée directement lors de sa fabrication en débordement de son alésage (1b) pour faire office de barrière d'étanchéité ou de protection après montage sur l'axe (2) en créant un effet de serrage entre le diamètre intérieur de ladite lèvre (1a) ou desdites lèvres, et le diamètre extérieur dudit axe (2), **caractérisée en ce que** la bague est réalisée dans un matériau composite présentant un module d'élasticité compris entre 500 et 6000 N/mm2.

2. Bague selon la revendication 1 **caractérisée en ce que** le matériau composite est une résine époxy ou vinyl ester ou polyester.

3. Bague selon l'une des revendications 1 - 2, **caractérisée en ce que** la résine époxy ou vinyl ester ou poly ester incorpore des renforts sous forme de fibres thermoplastiques d'épaisseur comprise entre 0,05 et 0,5 mm et intégrant des charges lubrifiantes entre 5 et 50 % du volume.

4. Bague selon l'une des revendications 1 - 3, **caractérisée en ce que** le serrage entre le diamètre intérieur de la lèvre (1a) et le diamètre extérieur de l'axe (2) est compris entre 0,05 et 4 mm.

5. Bague selon l'une des revendications 1 - 3, **caractérisée en ce que** le serrage entre le diamètre intérieur de la lèvre (1a) et le diamètre extérieur de l'axe (2) est compris entre 0,2 et 2 mm

6. Bague selon l'une des revendications 1 - 5, **caractérisée en ce que** la lèvre (1a) est formée à au moins l'une des extrémités de l'alésage (1b) de la bague.

7. Bague selon l'une des revendications 1 - 5, **caractérisée en ce que** la lèvre (1a) est formée à partir d'une gorge interne (1d) que présente l'alésage (1b).

8. Bague selon l'une des revendications 1 - 5, **caractérisée en ce que** la lèvre (1a) est formée directement à partir de l'alésage (1b).

9. Bague selon l'une des revendications 1 - 5, **caractérisée en ce que** la lèvre (1a) délimite avec la périphérie du corps de la bague, un évidement circulaire (1c).

10. Bague selon l'une des revendications 1 - 5, **caractérisée en ce que** la lèvre délimite avec la périphérie du corps de la bague, un épaulement (1e).

## Patentansprüche

1. Selbstschmierende Lagerbuchse (1) zur Lagerung auf einer Achse (2) und zum Führen in Translation und/oder Rotation, wobei die Buchse mindestens eine, direkt bei Herstellung unmittelbar an ihrer Bohrung (1b) ausgebildete Lippe (1a) aufweist, um nach Lagerung auf der Achse (2) als Dichtungs- oder Schutzbarriere zu fungieren, indem zwischen dem Innendurchmesser der Lippe (1a) bzw. den Lippen und dem Außendurchmesser der Achse (2) eine Klemmwirkung erzielt wird, **dadurch gekennzeichnet, dass** die Buchse aus einem Verbundstoff hergestellt wird, der einen Elastizitätsmodul zwischen 500 und 6000 N/mm2 aufweist.

2. Buchse nach Anspruch 1, **dadurch gekennzeichnet, dass** es sich bei dem Verbundstoff um Epoxidharz, Vinyl-Ester oder Polyester handelt.

3. Buchse nach Anspruch 1 oder 2, **dadurch gekennzeichnet, dass** das Epoxidharz oder der Vinyl-Ester oder der Polyester mit 0,05 bis 0,5 mm dicken Thermoplastfasern verstärkt wird, denen schmierende Füllstoffe mit einem Volumenanteil von 5 bis 50 % beigefügt sind.

4. Buchse nach einem der Ansprüche 1 bis 3, **dadurch gekennzeichnet, dass** die Klemmung zwischen dem Innendurchmesser der Lippe (1a) und dem Außendurchmesser der Achse (2) 0,05 bis 4 mm beträgt.

5. Buchse nach einem der Ansprüche 1 bis 3, **dadurch gekennzeichnet, dass** die Klemmung zwischen dem Innendurchmesser der Lippe (1a) und dem Außendurchmesser der Achse (2) 0,2 bis 2 mm beträgt.

6. Buchse nach einem der Ansprüche 1 bis 5, **dadurch gekennzeichnet, dass** die Lippe (1a) an mindestens einem Ende der Buchsenbohrung (1b) ausgebildet ist.

7. Buchse nach einem der Ansprüche 1 bis 5, **dadurch gekennzeichnet, dass** die Lippe (1a) aus einer in der Bohrung (1b) innen liegenden Nut (1d) gebildet wird.

8. Buchse nach einem der Ansprüche 1 bis 5, **dadurch gekennzeichnet, dass** die Lippe (1a) unmittelbar an der Bohrung (1b) ausgebildet ist.

9. Buchse nach einem der Ansprüche 1 bis 5, **dadurch gekennzeichnet, dass** die Lippe (1a) zusammen mit der Außenkontur des Buchsenkörpers eine kreisförmige Aussparung (1c) umgrenzt.

10. Buchse nach einem der Ansprüche 1 bis 5, **dadurch gekennzeichnet, dass** die Lippe zusammen mit der Außenkontur des Buchsenkörpers einen Bund (1e) umgrenzt.

## Claims

1. Self-lubricating hinge connection bush (1) for mounting on a shaft (2) for the purpose of translatory and/or rotational guidance, said bush having at least one lip (1a) formed directly at the time of manufacture as an overrun edge of its bore (1b) to act as a leak-tight or protective barrier after mounting on the shaft (2) by creating a tightening effect between the inside diameter of said lip (1a) or said lips, and the outside diameter of said shaft (2), **characterised in that** the bush made out of a composite material that has a modulus of elasticity of between 500 and 6000 N/mm2.

2. Bush as claimed in claim 1 **characterised in that** the composite material is an epoxy or vinylester or polyester resin.

3. Bush as claimed in one of claims 1 - 2, **characterised in that** epoxy or vinylester or polyester resin incorporates reinforcements in the form of thermoplastic fibres with a thickness of between 0.05 and 0.5 mm and including lubricating fillers between 5 and 50 % of the volume.

4. Bush as claimed in one of claims 1 - 3, **characterised in that** the tightening between the inside diameter of the lip (1a) and the outside diameter of the shaft (2) is between 0.05 and 4 mm.

5. Bush as claimed in one of claims 1 - 3, **characterised in that** the tightening between the inside diameter of the lip (1a) and the outside diameter of the shaft (2) is between 0.2 and 2 mm.

6. Bush as claimed in one of claims 1 - 5, **characterised in that** the lip (1a) is formed at one of the ends at least of the bore (1b) of the bush.

7. Bush as claimed in one of claims 1 - 5, **characterised in that** the lip (1a) is formed starting from an internal groove (1d) provided in the bore (1b).

8. Bush as claimed in one of claims 1 - 5, **characterised in that** the lip (1a) is formed directly starting from the bore (1b).

9. Bush as claimed in one of claims 1 - 5, **characterised in that** the lip (1a) defines, with the periphery of the body of the bush, a circular cut-out (1c).

10. Bush as claimed in one of claims 1 - 5, **characterised in that** the lip defines, with the periphery of the body of the bush, a shoulder (1e).
